# FASCICULE DE BREVET EUROPEEN

(11) **EP 2 878 759 B1**
(45) Date de publication et mention de la délivrance du brevet: **16.08.2017**
(21) Numéro de dépôt: 14195150.9
(22) Date de dépôt: 27.11.2014
(51) Int. Cl.: E06B 9/72, H02K 1/04, H02K 5/04, H02K 11/01, H02K 16/02

(54) **Actionneur électromecanique et installation de fermeture ou de protection solaire comprenant un tel actionneur**
Elektromechanisches Stellglied, und Verschluss- oder Sonnenschutzanlage, die ein solches Stellglied umfasst
Electromechanical actuator and closing or sun-protection system including such an actuator

(30) Priorité: 29.11.2013 FR 1361897
(43) Date de publication de la demande: 03.06.2015
(73) Titulaire: SOMFY ACTIVITES SA, 74300 Cluses (FR)
(72) Inventeur: Tollance, Thierry, 74930 PERS-JUSSY (FR); Brion, Pierre, 74300 CHATILLON SUR CLUSES (FR); Foggia, Albert, 38000 GRENOBLE (FR)
(74) Mandataire: Lavoix

(56) Documents cités:
- EP-A2- 2 026 446
- WO-A2-2012/123575
- GB-A- 876 574
- US-A- 3 772 543
- US-B1- 7 902 700

## Description

L'invention concerne un actionneur électromécanique, destiné à être inséré dans un tube d'enroulement d'un écran domotique.

Dans le domaine du pilotage motorisé des installations de fermeture ou de protection solaire des bâtiments, il est connu d'utiliser un actionneur, qui peut être intégré au tube d'enroulement d'un écran domotique. A cet effet, l'actionneur présente une structure allongée, avec une faible dimension radiale adaptée pour pénétrer à l'intérieur du tube. C'est pourquoi, on parle d'un actionneur tubulaire. La longueur de l'actionneur, et en particulier du motoréducteur, compense sa faible section pour obtenir un couple important.

Les moteurs électriques doivent être adaptés aux actionneurs tubulaires, du fait de leur structure allongée. Une structure intéressante de moteur, dite moteur « haltère », comprend un rotor réalisé à partir d'un arbre sur lequel sont emmanchés deux disques, qui sont solidaires en rotation de l'arbre. Le stator d'un moteur «haltère» est formé par un ensemble de barres feuilletées, qui s'étendent globalement parallèlement à l'axe de rotation du rotor. Cet ensemble de barres feuilletées forme une cage entourant le rotor et le flux magnétique nécessaire à l'entraînement du rotor en rotation autour de son axe circule dans les barres feuilletées de cette cage. Un tel moteur est décrit dans la demande WO-A-2012/123575.

Par ailleurs, un actionneur tubulaire comprend généralement une enveloppe métallique, souvent réalisée en acier ferromagnétique, qui est montée fixe par rapport à un bâti. Cette enveloppe reprend les efforts liés à la charge et à l'entraînement de celle-ci par rapport au bâti et assure la tenue mécanique de l'actionneur au sein du tube d'enroulement. Cependant, bien que l'acier ferromagnétique offre de bonnes propriétés en termes de résistance mécanique, c'est également un matériau hautement magnétique, et donc un très bon conducteur du flux magnétique, ce qui perturbe la circulation du flux magnétique traversant les barres feuilletées du stator lorsque le moteur est utilisé à l'intérieur de l'enveloppe de l'actionneur. Plus précisément, le flux magnétique circulant dans le stator a tendance à se diriger radialement à l'axe de rotation du rotor en présence de l'enveloppe métallique de l'actionneur. Le cas où le flux magnétique prend une direction centripète est idéal au fonctionnement puisque le flux magnétique est canalisé en direction du rotor, mais le cas où le flux prend une direction centrifuge est nuisible aux performances du moteur. En effet, ces divergences de flux, ou flux de fuite, s'accumulent au sein de l'enveloppe magnétique, ce qui engendre, d'une part, des pertes importantes de puissance et une saturation rapide de l'enveloppe magnétique.

Une solution à ce problème consiste à réduire le diamètre du moteur afin de créer un entrefer important entre les barres feuilletées du stator et l'enveloppe métallique. Cependant, la réduction du diamètre du moteur implique une diminution de ses performances. Il est nécessaire d'allonger le moteur pour obtenir des performances équivalentes. L'actionneur perd donc en compacité, sans que l'espace ainsi dégagé ne soit rentabilisé.

Une autre solution consiste à utiliser une enveloppe à la fois résistante et ne perturbant pas la circulation du flux magnétique à l'intérieur du moteur, comme une enveloppe en acier inoxydable amagnétique. Cela augmente en revanche beaucoup le coût final de l'actionneur.

C'est à ces inconvénients qu'entend plus particulièrement remédier l'invention en proposant un actionneur électromécanique à enveloppe métallique dans lequel les flux de fuite du moteur sont limités de manière économique.

A cet effet, l'invention concerne un actionneur électromécanique, monophasé ou polyphasé, destiné à être inséré dans un tube d'enroulement d'un écran domotique et comprenant un moteur dit « haltère », comportant un stator et un rotor, le rotor comprenant un arbre sur lequel sont disposés deux disques équipés d'aimants et solidaires de l'arbre en rotation autour d'un axe de rotation, et une enveloppe en matériau magnétique, notamment en acier ferromagnétique. Conformément à l'invention, l'actionneur comprend, en outre, un carter en matériau amagnétique disposé radialement entre le moteur et l'enveloppe de l'actionneur.

Grâce à l'invention, le carter en matériau amagnétique forme un entrefer radial entre le stator du moteur et l'enveloppe en matériau magnétique. Il limite donc les flux de fuite du moteur puisque le flux circulant dans le stator n'a plus tendance à diverger en direction de l'enveloppe en matériau magnétique si bien qu'il y a moins de perte de flux magnétique. Les performances du moteur ne sont donc pas impactées par l'utilisation d'une enveloppe en matériau magnétique pour l'actionneur, laquelle est importante pour la tenue mécanique de l'actionneur.

Selon des aspects avantageux mais non obligatoires de l'invention, l'actionneur électromécanique comporte une ou plusieurs des caractéristiques suivantes, prises dans toute combinaison techniquement admissible :
- Le carter en matériau amagnétique et l'enveloppe en matériau magnétique de l'actionneur sont des tubes disposés coaxialement autour du moteur.
- La distance, mesurée radialement à l'axe de rotation, entre le stator et l'enveloppe en matériau magnétique, est choisie sensiblement supérieure ou égale à l'entrefer magnétique du moteur, c'est-à-dire à la somme de l'entrefer entre un aimant du rotor et le stator avec l'épaisseur de l'aimant.
- La distance mesurée radialement à l'axe de rotation, entre le stator et l'enveloppe est choisie sensiblement inférieure à l'entrefer magnétique du moteur, c'est à dire à la somme de l'entrefer entre un aimant du rotor et le stator avec inclus l'épaisseur de l'aimant.
- Le stator du moteur comprend plusieurs barres, notamment des barres feuilletées, qui sont fixées entre deux flasques disposés chacun, par rapport à un disque, du côté opposé à un volume défini axialement entre les deux disques du rotor.
- Les barres feuilletées du stator sont formées par un empilement de tôles magnétiques.
- Les grains des tôles magnétiques des barres feuilletées sont orientés de manière à conduire le flux magnétique selon une direction préférentielle axiale.
- Plusieurs barres, parmi les barres feuilletées du stator, sont équipées d'une bobine de création d'un champ magnétique tournant.
- Les bobines du stator sont alimentées sélectivement en courant électrique, la commutation au niveau de l'alimentation des bobines étant commandée par une unité électronique de pilotage du moteur.
- Le carter en matériau amagnétique est réalisé dans un matériau électriquement conducteur, en particulier en aluminium.
- Le carter en matériau amagnétique encapsule le moteur.

L'invention concerne également une installation de fermeture ou de protection solaire, comprenant un écran domotique, un tube d'enroulement de l'écran et un actionneur électromécanique d'entraînement du tube, tel que décrit précédemment.

L'invention sera mieux comprise et d'autres avantages de celle-ci apparaîtront plus clairement à la lumière de la description qui va suivre d'un mode de réalisation d'un actionneur électromécanique conforme à son principe, donnée uniquement à titre d'exemple et faite en référence aux dessins annexés dans lesquels :
- la figure 1 est une coupe de principe d'une installation de fermeture conforme à l'invention,
- la figure 2 est une coupe schématique à plus grande échelle d'un actionneur également conforme à l'invention, qui appartient à l'installation de fermeture de la figure 1,
- la figure 3 est une vue à plus grande échelle de l'encerclé III de la figure 2, et
- la figure 4 est une vue en perspective d'un moteur appartenant à l'actionneur de la figure 2.

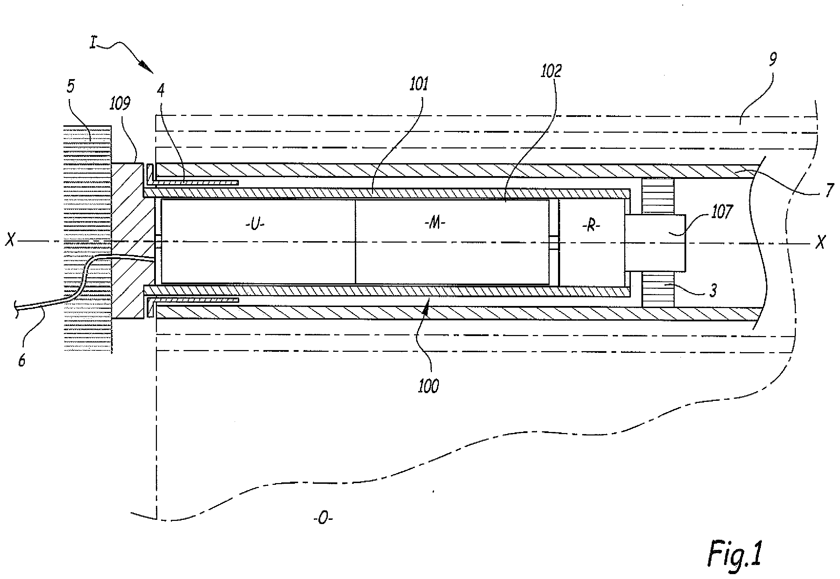

Sur la figure 1 est représentée une installation I de fermeture d'une ouverture O d'un bâtiment. Cette installation I comprend un écran domotique qui, dans l'exemple, est un volet 9. L'installation I comprend un tube d'enroulement 7 qui est centré sur un axe de révolution X-X et autour duquel le volet 9 s'enroule et se déroule pour, alternativement, descendre ou monter le volet 9. Le tube 7 est entraîné par un actionneur 100, en rotation autour de son axe de révolution X-X. Le tube 7 est disposé horizontalement en partie haute de l'ouverture O. Une paroi délimitant en partie l'ouverture O est représentée, à la figure 1, par un bâti 5.

L'actionneur 100 est positionné à l'intérieur du tube d'enroulement 7 dans une enveloppe tubulaire 101 et est fixé au bâti 5 par l'intermédiaire d'une pièce de fixation 109 qui fait saillie à une extrémité de l'enveloppe tubulaire 101. L'enveloppe tubulaire 101 est réalisée dans un matériau magnétique résistant, comme de l'acier ferromagnétique. Du côté opposé à la pièce de fixation 109, un arbre de sortie 107 fait saillie à une seconde extrémité de l'enveloppe tubulaire 101 et porte une couronne 3. Cette couronne 3 est solidaire du tube 7, en rotation autour de l'axe X-X. De cette manière, l'actionneur 100 entraîne le tube d'enroulement 7 en rotation autour de l'axe X-X. Un câble d'alimentation 6 apporte l'énergie nécessaire au fonctionnement de l'actionneur 100 et un palier lisse 4 est intercalé coaxialement entre l'enveloppe cylindrique 101 et le tube 7 pour permettre au tube 7 de glisser autour de l'enveloppe cylindrique 101.

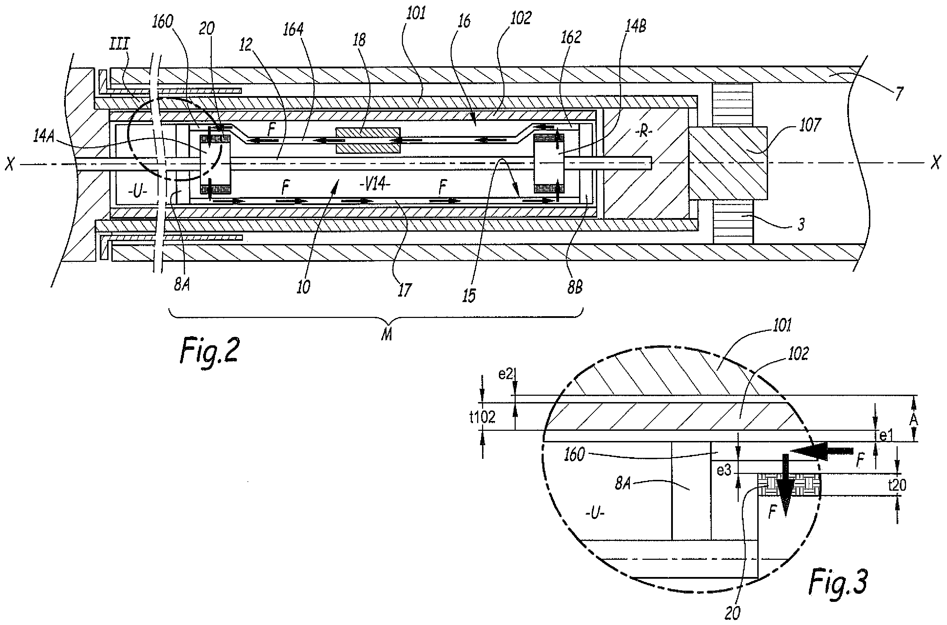

L'actionneur 100 comprend un moteur M et un réducteur R qui sont représentés en vue extérieure à la figure1 et en coupe de principe à la figure 2.

Le moteur M est un moteur à courant continu et à commutations électroniques, ou « brushless », c'est-à-dire qu'il ne comporte pas de système balais-collecteurs pour assurer la commutation au niveau de l'alimentation des bobines du stator, et donc, la réalisation d'un champ magnétique tournant. En revanche, le moteur M comprend une unité électronique de pilotage U, chargée d'assurer la commutation du courant dans les bobines du stator. En pratique, le moteur M est pourvu d'un capteur de position du rotor, par exemple un capteur à effet Hall, qui permet de connaître la position du rotor et d'orienter le champ magnétique statorique en conséquence, pour faire tourner le rotor.

L'unité électronique de pilotage U est représentée schématiquement aux figures 1 et 2, elle est disposée de manière adjacente au moteur M, du côté opposé au réducteur R. Pour la clarté du dessin, l'unité U est représentée partiellement en longueur à la figure 2 et la longueur du moteur M est exagérée sur cette figure.

Dans l'exemple, le moteur M est polyphasé, notamment triphasé. En variante, il est possible d'utiliser un moteur monophasé.

Le moteur M est protégé par un carter 102 en matériau amagnétique, qui est un tube disposé coaxialement entre le moteur M et l'enveloppe tubulaire 101 de l'actionneur 100. Le carter 102 forme une enveloppe secondaire pour le moteur M. Les enveloppes 101 et 102 sont immobiles à l'intérieur du tube d'enroulement 7 et le carter 102 forme un entrefer radial entre le moteur M et l'enveloppe 101 de l'actionneur 100. Cela permet d'obtenir un bloc moteur complet. Dans l'exemple, le carter en matériau amagnétique 102 est réalisé en aluminium.

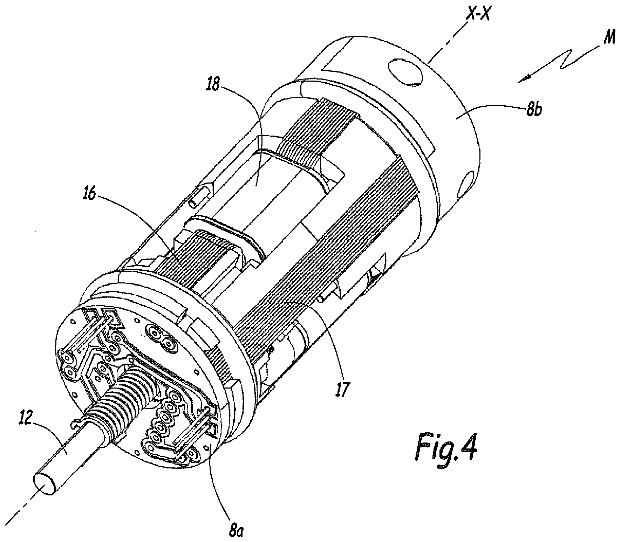

Sur les figures 2 et 4 est représenté plus en détail le moteur M. Le moteur M est un moteur de type «haltère». Il comprend un stator 15 et un rotor 10. Le rotor 10 inclut un arbre 12 sur lequel sont placés deux disques 14A et 14B, ce qui donne au rotor 10 une forme en haltère. L'arbre 12 forme un arbre d'entrée du réducteur R et l'arbre 107 un arbre de sortie du réducteur R. L'arbre 12 et l'arbre 107 ne tournent donc pas à la même vitesse.

Les disques 14A et 14B sont creux de manière à être emmanchés sur l'arbre 12 et sont solidaires en rotation de celui-ci, autour de l'axe de rotation X-X. Chaque disque 14A et 14B comprend un ensemble d'aimants 20 qui sont en nombre pair. Les aimants 20 sont parallélépipédiques et sont montés sur le pourtour extérieur des disques 14a et 14b. A cet effet, les disques 14A et 14B ont une forme polygonale plutôt qu'une forme circulaire. D'autres formes d'aimants sont possibles. Ils peuvent aussi être rectifiés et présenter une surface extérieure de forme cylindrique. Ils peuvent aussi être insérés à l'intérieur du rotor. Dans ce cas, ils auront la forme d'un parallélépipède ou d'un trapèze.

Les aimants 20 sont des aimants tournants dont les polarités sont orientées radialement par rapport à l'axe X-X, de manière à créer un flux essentiellement radial. Ces aimants forment une alternance de pôles nord et de pôles sud à la périphérie du rotor. Autrement dit, une droite allant du pôle nord au pôle sud de chaque aimant 20 s'étend selon une direction radiale par rapport à l'axe X-X. Ainsi, les champs magnétiques produits par les aimants 20, lorsque le rotor 12 tourne autour de l'axe X-X, sont des champs radiaux tournants par rapport à l'axe X-X.

La polarité de chaque paire d'aimants adjacents, ou successifs, est inversée de sorte que les aimants 20 sont successivement attirés et repoussés par un flux magnétique F produit dans le stator 15, ce qui fait tourner le rotor 10 à l'intérieur du stator 15.

Le stator 15 du moteur M est formé par un ensemble de barres feuilletées 16 et 17 qui sont régulièrement réparties autour de l'axe X-X. Plus précisément, les barres feuilletées 16 et 17 sont réparties de manière alternative autour de l'axe X-X, c'est-à-dire qu'une barre feuilletée 16 est adjacente à deux barres feuilletées 17 et inversement. Ces barres feuilletées 16 et 17 sont formées par empilement de paquets de tôles magnétiques. Chacune de ces barres est placée à l'intérieur d'un enroulement constituant une phase de l'alimentation. Dans certaines versions, certaines barres peuvent ne pas comporter d'enroulement. Les barres 16 et 17 s'aimantent facilement et perdent rapidement leur capacité d'aimantation en l'absence de flux magnétique. Elles sont chacune maintenues par deux flasques 8A et 8B qui sont traversés par l'arbre 12 du rotor et qui sont chacun disposés, par rapport à un disque 14A ou 14B, du côté opposé à un volume V14 défini axialement entre les deux disques 14A et 14B, c'est-à-dire qui s'étend selon l'axe X-X. Les barres feuilletées 16 et 17 et les flasques 8A et 8B forment ensemble une cage dans laquelle est disposé le rotor 10. Elles présentent chacune une section transversale rectangulaire qui est identique pour toutes les barres feuilletées.

Les barres feuilletées 17 sont rectilignes et s'étendent parallèlement à l'axe X-X entre le flasque 8A et le flasque 8B. Les barres feuilletées 16 s'étendent également entre le disque 8A et le disque 8B mais sont coudées en deux endroits. En effet, les barres feuilletées 16 comportent chacune une première portion rectiligne 160 qui est fixée au flasque 8A et qui est en regard radial du disque 14A, une deuxième portion rectiligne 162 qui est fixée au flasque 8B et qui est en regard radial du disque 14B et une troisième portion rectiligne 164 qui est disposée entre la première portion 160 et la deuxième portion 162 c'est-à-dire dans le volume V14 compris entre les deux disques 14A et 14B. La troisième portion rectiligne 164 est reliée aux deux premières portions 160 et 162 par des coudes obliques dirigés vers l'arbre 12. Ces coudes obliques s'étendent de manière inclinée, mais non perpendiculaire, par rapport à l'axe X-X.

Une bobine 18 est disposée autour de la troisième portion 164 de chaque barre 16. En fonctionnement du moteur, cette bobine 18 est sélectivement parcourue par un courant électrique de sorte à générer un couple tournant. L'alimentation sélective des bobines 18 disposées sur les barres 16 est assurée par l'unité électronique de pilotage U, qui assure la commutation au niveau de l'alimentation des bobines 18.Les coudes liant les portions 160 et 162 à la portion 164 de la barre 16 ne sont pas nécessairement orientés à 90° par rapport à l'axe X-X. Ainsi, en fonctionnement, le flux magnétique F circulant dans les barres feuilletées 16 est essentiellement axial. Dans l'exemple, la polarité de la bobine 18 fait que le flux F est dirigé vers la gauche à la figure 2 et parvient jusqu'à la première portion 160 de la barre 16. Ensuite, le flux magnétique change de direction à l'approche des aimants 20, c'est-à-dire qu'il passe d'une direction axiale à une direction radiale centripète par rapport à l'axe X-X. Le circuit de flux est ainsi fermé.

Comme visible à la figure 2, le carter en matériau amagnétique 102 entoure les barres feuilletées 16 et 17. Ce carter 102 présente une épaisseur radiale t102 et forme, avec le stator 15, un entrefer e1. De même, on note e2 l'entrefer formé entre l'enveloppe en matériau magnétique 101 et le carter en matériau amagnétique 102 et e3 l'entrefer mécanique entre les aimants 20 du rotor 10 et les barres feuilletées 16 et 17, cet entrefer e3 est environ compris entre 0,3 et 0,8 mm. Enfin, on note t20 l'épaisseur radiale des aimants 20, qui est de l'ordre de 1,5 mm. Ainsi, l'entrefer magnétique E du moteur M, correspondant à la somme de l'entrefer e3 et de l'épaisseur t20 de l'aimant, est de l'ordre de 1,8 à 2,3 mm. Les entrefers e1, e2 et e3 sont mesurés radialement par rapport à l'axe X-X. Dans l'exemple, l'épaisseur t102 du carter 102 est choisie de l'ordre de 0,8 mm. De même, les entrefers e1 et e2 sont compris entre 0,3 mm et 0,8 mm, de préférence respectivement égaux à 0,3 mm. On note également A, la distance mesurée radialement à l'axe de rotation X-X, entre le stator 15 et l'enveloppe 101. Cette distance A est avantageusement choisie sensiblement supérieure ou égale à l'entrefer magnétique E du moteur, de sorte à atteindre l'optimum de rendement du moteur.

Ainsi, l'épaisseur t102 du carter 102 est choisie pour que la valeur de A soit supérieure ou égale à l'entrefer magnétique E du moteur, soit A ≥ e3 + t20. Toutefois, il s'avère qu'une hauteur radiale A plus faible que cette somme donne des résultats de rendements moteurs acceptables. En effet, une telle disposition donne un rendement moteur environ égal à 60%, contre 72% avec une valeur de A supérieure à l'entrefer magnétique E.

Le carter amagnétique 102 protège le moteur M des effets magnétiques liés à la présence de l'enveloppe en acier ferromagnétique 101. En effet, sans ce carter en matériau amagnétique 102, le flux magnétique F circulant dans les barres feuilletées 16 et 17 du stator 15 serait court-circuité par l'enveloppe magnétique 101. Plus précisément, le flux magnétique F aurait tendance à être détourné radialement de manière centrifuge, formant alors des flux de fuite au sein du moteur M. Ces flux de fuite entraîneraient une perte du flux magnétique transmis aux disques 14A et 14B du rotor 10 et donc, une réduction des performances du moteur M. Le carter 102 isole donc le moteur M de l'enveloppe magnétique 101, ce qui permet de limiter les flux de fuite du moteur M, sans fragiliser la tenue mécanique de l'actionneur 100.

En outre, le carter en matériau amagnétique 102 encapsulant le moteur M, protège celui-ci contre les impuretés, sachant qu'un matériau magnétique attire généralement la poussière. Le bloc moteur formé par le moteur M enveloppé du carter 102 est également découplé du reste de l'actionneur 100, ce qui est intéressant pour réduire les vibrations et le bruit aérien ou solidien.

Enfin, le carter en matériau amagnétique 102 est électriquement conducteur. Or, un élément conducteur placé dans un champ magnétique variable, ici produit par les pôles des aimants tournants 20, est le siège de courants de Foucault. Le carter 102 forme donc un blindage électromagnétique par courants de Foucault, qui protège le moteur M des champs magnétiques extérieurs. En l'absence du carter 102, les flux de fuite du moteur M circuleraient au sein de l'enveloppe en matériau magnétique 101 et se reboucleraient dans les barres feuilletées, ce qui impliquerait une saturation rapide des tôles des barres. Cette saturation entraînerait une augmentation du courant traversant les barres et une chute du rendement moteur. Avec l'actionneur selon l'invention, les courants de Foucault s'opposent aux flux de fuite du moteur M dans le tube acier ferromagnétique ce qui préserve le rendement du moteur.

Selon un mode de réalisation complémentaire, les barres feuilletées 16 et 17 du stator 15 sont chacune formées par un empilement de tôles magnétiques à grains orientés. Ce type de tôle augmente la performance magnétique globale du moteur, notamment parce qu'elles saturent à des valeurs de couple supérieures à celles pour des tôles classiques, avec un gain allant de 15% à 25%. Ainsi, elles permettent de garantir un meilleur rendement du moteur.

En variante non représentée, les sections des barres feuilletées 16 et 17 peuvent être différentes d'une section rectangulaire. Par exemple, il est possible d'envisager des barres feuilletées 16 et 17 présentant une section ovale ou circulaire. En variante, les sections des barres feuilletées 16 peuvent être différentes de celles des barres feuilletées 17, ce qui peut être avantageux pour mieux diriger ou canaliser le flux magnétique.

En variante non représentée, les aimants 20 peuvent être montés sur les côtés de chaque disque 14A et 14B, de préférence du côté tourné vers l'autre disque.

En variante, le carter 102 est réalisé dans un matériau électriquement isolant, par exemple en matière plastique. Il peut aussi être en cuivre, en bois ou encore en matériau composite. Par exemple, le carter 102 peut être fabriqué par drapage de fibres de verres en combinaison avec une résine thermodurcissable.

En variante non représentée, l'écran domotique 9 est un store de protection solaire ou un écran de projection vidéo.

Les caractéristiques techniques des modes de réalisation et variantes envisagées ci-dessus peuvent être combinées entre elles pour donner de nouveaux modes de réalisation de l'invention.

## Revendications

1. Actionneur électromécanique (100), monophasé ou polyphasé, destiné à être inséré dans un tube (7) d'enroulement d'un écran domotique (9) et comprenant :
- un moteur (M) dit «haltère», comportant un stator (15) et un rotor (10), le rotor comprenant un arbre (12) sur lequel sont disposés deux disques (14A, 14B) équipés d'aimants (20) et solidaires de l'arbre en rotation autour d'un axe de rotation (X-X), et
- une enveloppe en matériau magnétique (101), notamment en acier ferromagnétique,
**caractérisé en ce qu'**il comprend, en outre, un carter en matériau amagnétique (102) disposé radialement entre le moteur (M) et l'enveloppe (101) de l'actionneur (100).

2. Actionneur selon la revendication 1, **caractérisé en ce que** le carter en matériau amagnétique (102) et l'enveloppe en matériau magnétique (101) de l'actionneur (100) sont des tubes disposés coaxialement autour du moteur (M).

3. Actionneur selon la revendication 2, **caractérisé en ce que** la distance (A) mesurée radialement à l'axe de rotation (X-X), entre le stator (15) et l'enveloppe en matériau magnétique (101) est choisie sensiblement supérieure ou égale à l'entrefer magnétique (E) du moteur, c'est à dire à la somme de l'entrefer (e3) entre un aimant (20) du rotor et le stator (15) avec l'épaisseur (t20) de l'aimant.

4. Actionneur selon la revendication 2, **caractérisé en ce que** la distance (A) mesurée radialement à l'axe de rotation (X-X), entre le stator (15) et l'enveloppe (101) est choisie sensiblement inférieure à l'entrefer magnétique (E) du moteur, c'est à dire à la somme de l'entrefer (e3) entre un aimant (20) du rotor et le stator (15) avec inclus l'épaisseur (t20) de l'aimant.

5. Actionneur selon l'une des revendications précédentes, **caractérisé en ce que** le stator (15) du moteur (M) comprend plusieurs barres, notamment des barres feuilletées (16, 17), qui sont fixées entre deux flasques (8A, 8B) disposés chacun, par rapport à un disque (14A, 14B), du côté opposé à un volume (V14) défini axialement entre les deux disques du rotor.

6. Actionneur selon la revendication 5, **caractérisé en ce que** les barres feuilletées (16, 17) du stator (15) sont formées par un empilement de tôles magnétiques.

7. Actionneur selon la revendication 6, **caractérisé en ce que** les grains des tôles magnétiques des barres feuilletées (16, 17) sont orientés de manière à conduire le flux magnétique (F) selon une direction préférentielle axiale.

8. Actionneur selon l'une des revendications 5 à 7, **caractérisé en ce que** plusieurs barres (16), parmi les barres feuilletées (16, 17) du stator, sont équipées d'une bobine (18) de création d'un champ magnétique tournant.

9. Actionneur selon la revendication 8, **caractérisé en ce que** les bobines (18) du stator (15) sont alimentées sélectivement en courant électrique, la commutation au niveau de l'alimentation des bobines étant commandée par une unité électronique (U) de pilotage du moteur (M).

10. Actionneur selon l'une des revendications précédentes, **caractérisé en ce que** le carter en matériau amagnétique (102) est réalisé dans un matériau électriquement conducteur, en particulier en aluminium.

11. Actionneur selon l'une des revendications précédentes, **caractérisé en ce que** le carter en matériau amagnétique (102) encapsule le moteur.

12. Installation (I) de fermeture ou de protection solaire, comprenant un écran domotique, un tube d'enroulement de l'écran et un actionneur électromécanique d'entraînement du tube, **caractérisée en ce que** l'actionneur est selon l'une des revendications précédentes.

## Patentansprüche

1. Einphasiges oder mehrphasiges elektromechanisches Stellglied (100) zum Einsetzen in eine Wickelröhre (7) zum Aufwickeln einer haustechnischen Materialbahneinrichtung (9), umfassend:
- einen sogenannten Hantelmotor (M), welcher einen Stator (15) und einen Rotor (10) aufweist, wobei der Rotor eine Welle (12) umfasst, auf welcher zwei mit Magneten (20) versehene und um eine Drehachse (X-X) drehfest mit der Welle verbundene Scheiben (14A, 14B) angeordnet sind, und
- einen Mantel aus magnetischem Material (101), insbesondere aus ferromagnetischem Stahl,
**dadurch gekennzeichnet, dass** das Stellglied (100) des Weiteren ein Gehäuse aus nichtmagnetischem Material (102) umfasst, welches radial zwischen dem Motor (M) und dem Mantel (101) des Stellglieds (100) angeordnet ist.

2. Stellglied nach Anspruch 1, **dadurch gekennzeichnet, dass** das Gehäuse aus nichtmagnetischem Material (102) und der Mantel aus magnetischem Material (101) des Stellglieds (100) koaxial um den Motor (M) angeordnete Röhren sind.

3. Stellglied nach Anspruch 2, **dadurch gekennzeichnet, dass** der radial zu der Drehachse (X-X) gemessene Abstand (A) zwischen dem Stator (15) und dem Mantel aus magnetischem Material (101) im Wesentlichen größer oder gleich dem Magnetspalt (E) des Motors, also größer oder gleich der Summe des Luftspalts (e3) zwischen einem Magneten (20) des Rotors und dem Stator (15) und der Dicke (t20) des Magneten gewählt ist.

4. Stellglied nach Anspruch 2, **dadurch gekennzeichnet, dass** der radial zu der Drehachse (X-X) gemessene Abstand (A) zwischen dem Stator (15) und dem Mantel (101) im Wesentlichen kleiner als der Magnetspalt (E) des Motors, also kleiner als die Summe des Luftspalts (e3) zwischen einem Magneten (20) des Rotors und dem Stator (15) und der Dicke (t20) des Magneten gewählt ist.

5. Stellglied nach einem der vorhergehenden Ansprüche, **dadurch gekennzeichnet, dass** der Stator (15) des Motors (M) mehrere Stäbe, insbesondere geblechte Stäbe (16, 17) umfasst, welche zwischen zwei Flanschen (8A, 8B) befestigt sind, die jeweils bezogen auf eine Scheibe (14A, 14B) auf der von einem axial zwischen den beiden Scheiben des Rotors definierten Volumen (V14) abgewandten Seite angeordnet sind.

6. Stellglied nach Anspruch 5, **dadurch gekennzeichnet, dass** die geblechten Stangen (16, 17) des Stators (15) durch eine Stapelung magnetischer Bleche ausgebildet sind.

7. Stellglied nach Anspruch 6, **dadurch gekennzeichnet, dass** die Körner der magnetischen Bleche der geblechten Stäbe (16, 17) derart orientiert sind, dass sie den magnetischen Fluss (F) in einer bevorzugten axialen Richtung leiten.

8. Stellglied nach einem der Ansprüche 5 bis 7, **dadurch gekennzeichnet, dass** mehrere Stangen (16) unter den geblechten Stangen (16, 17) des Stators mit einer Spule (18) zur Erzeugung eines drehenden Magnetfelds versehen sind.

9. Stellglied nach Anspruch 8, **dadurch gekennzeichnet, dass** die Spulen (18) des Stators (15) wahlweise mit elektrischem Strom versorgbar sind, wobei die Schaltung der Versorgung der Spulen durch eine elektrische Steuereinheit (U) des Motors (M) steuerbar ist.

10. Stellglied nach einem der vorhergehenden Ansprüche, **dadurch gekennzeichnet, dass** das Gehäuse aus nichtmagnetischem Material (102) aus einem elektrisch leitfähigen Material, insbesondere aus Aluminium, gebildet ist.

11. Stellglied nach einem der vorhergehenden Ansprüche, **dadurch gekennzeichnet, dass** das Gehäuse aus nichtmagnetischem Material (102) den Motor einkapselt.

12. Verschluss- oder Sonnenschutzanlage (I), umfassend eine haustechnische Materialbahneinrichtung, eine Wickelröhre zum Aufwickeln der Materialbahneinrichtung und ein elektromechanisches Stellglied zum Antrieb der Röhre, **dadurch gekennzeichnet, dass** das Stellglied ein Stellglied nach einem der vorhergehenden Ansprüche ist.

## Claims

1. Single-phase or polyphase electromechanical actuator (100) intended for insertion into a winding tube (7) of a home automation screen (9) and comprising:
• a so-called "dumbbell" motor (M) having a stator (15) and a rotor (10), wherein the rotor comprises a shaft (12) with two discs (14A, 14B) arranged thereon, which are fitted with magnets (20) and rotationally fixed to the shaft around an axis of rotation (X-X), and
• a shell made of magnetic material (101), in particular of ferromagnetic steel,
**characterised in that** it additionally comprises a casing made of non-magnetic material (102) arranged radially between the motor (M) and the shell (101) of the actuator (100).

2. Actuator according to claim 1, **characterised in that** the casing of non-magnetic material (102) and the shell of magnetic material (101) of the actuator (100) are tubes arranged coaxially around the motor (M).

3. Actuator according to claim 2, **characterised in that** the distance (A) measured radially to the axis of rotation (X-X) between the stator (15) and the shell of magnetic material (101) is selected to be substantially more than or equal to the magnetic air gap (E) of the motor, i.e. than/to the sum of the air gap (e3) between a magnet (20) of the rotor and the stator (15) with the thickness (t20) of the magnet.

4. Actuator according to claim 2, **characterised in that** the distance (A) measured radially to the axis of rotation (X-X) between the stator (15) and the shell (101) is selected to be substantially less than the magnetic air gap (E) of the motor, i.e. than the air gap (e3) between a magnet (20) of the rotor and the stator (15) including the thickness (t20) of the magnet.

5. Actuator according to one of the preceding claims, **characterised in that** the stator (15) of the motor (M) comprises several bars, in particular laminated bars (16, 17), which are fixed between two flanges (8A, 8B) each arranged in relation to a disc (14A, 14B) on the opposite side of a space (V14) defined axially between the two discs of the rotor.

6. Actuator according to claim 5, **characterised in that** the laminated bars (16, 17) of the stator (15) are formed by a stack of magnetic metal sheets.

7. Actuator according to claim 6, **characterised in that** the grains of the laminated bars (16, 17) are oriented so as to direct the magnetic flux (F) in a preferred axial direction.

8. Actuator according to one of claims 5 to 7, **characterised in that** several bars (16) of the laminated bars (16, 17) of the stator are fitted with a coil (18) for creating a rotating magnetic field.

9. Actuator according to claim 8, **characterised in that** the coils (18) of the stator (15) are selectively supplied with electric current, wherein the switching with respect to the supply of the coils is controlled by an electronic control unit (U) of the motor (M).

10. Actuator according to one of the preceding claims, **characterised in that** the casing of non-magnetic material (102) is formed from an electrically conductive material, in particular aluminium.

11. Actuator according to one of the preceding claims, **characterised in that** the casing of non-magnetic material (102) encapsulates the motor.

12. Installation (I) for closure or sun protection comprising a home automation screen, a winding tube of the screen and an electromagnetic actuator for driving the tube, **characterised in that** the actuator is according to one of the preceding claims.
